# EUROPEAN PATENT SPECIFICATION

(11) **EP 4 589 187 B1**
(45) Date of publication and mention of the grant of the patent: **20.05.2026**
(21) Application number: 24221084.7
(22) Date of filing: 18.12.2024
(51) Int. Cl.: F16L 59/14

(54) **INSULATED PIPE AND METHODS FOR MANUFACTURING THEREOF**
ISOLIERTES ROHR UND VERFAHREN ZU SEINER HERSTELLUNG
TUYAU ISOLÉ ET SES PROCÉDÉS DE FABRICATION

(30) Priority: 18.01.2024 NL 2036830
(43) Date of publication of application: 23.07.2025
(73) Proprietor: Thermaflex International Holding B.V., 5145 NS Waalwijk (NL)
(72) Inventor: BOUT, Hendrik Willem, 5145 NS Waalwijk (NL); VAN BERKEL, Bertil Nicolaas Joseph Marie, 5145 NS Waalwijk (NL)
(74) Representative: van Dam, Vincent

(56) References cited:
- EP-A1- 3 699 470
- US-A1- 2007 102 055
- US-A1- 2019 017 646

## Description

The present invention relates to an insulated pipe as defined in claim 1 or claim 4. The present invention also relates to a method for manufacturing said insulated pipe as defined in claim 9 or 12. The invention also relates to a heating system comprising one or more of said insulated pipes in connection with a heat source, for instance a district heating system as defined in claim 15. The invention also relates to a cooling system comprising one or more of said insulated pipes in connection with a cooling source as defined in claim 15.

### Introduction

In the field of thermal insulation techniques insulated pipes are commonly used to transport a hot or cold medium, such as water, to the place of need thereof.

For instance, insulated pipes are used in heat distribution systems, such as district heat distribution networks in order to transport heat to secondary and tertiary distribution networks, for instance heat networks of houses or other buildings.

In order to avoid heat loss during transfer of the heating medium to the eventual destination it is important that the pipes used are well insulated.

US 2007/102055 A1 discloses insulation systems comprising foam and nanoporous aerogel materials.

US 2019/017646 A1 discloses an insulated pipe having one or more inner pipes having a plastic, a flexible vacuum insulation panel surrounding the one or more inner pipes, and an outer jacket.

EP 3 699 470 A1 discloses an insulated pipe comprising one or more inner pipes comprising a plastic, a flexible vacuum insulation panel in the form of units joined to each other wrapped around at least one of the one or more inner pipes, one or more insulation layers, and an outer jacket.

The inventors have considered that there is room for improvement with respect to insulated pipes.

### Summary of the invention

The present invention relates in one aspect to an insulated pipe as defined in claim 1.

In a second aspect the invention relates to an insulated pipe as defined in claim 4.

In a third aspect the invention relates to a method for manufacturing an insulated pipe as defined in claim 9.

In a fourth aspect the invention relates to a method for manufacturing an insulated pipe as defined in claim 12.

The insulated pipe of the first aspect is obtainable or can be obtained by the method of the third aspect.

The insulated pipe of the second aspect is obtainable or can be obtained by the method of the fourth aspect.

In a fifth aspect the invention relates to a heating system as defined in claim 15.

In a sixth aspect the invention relates to a cooling system also as defined in claim 15.

The inventors have found that by welding the foam surrounding the assembly or assemblies of the inner pipe, flexible insulation sheet and plastic film it is ensured that the foam layer fits tightly with the assembly of the inner pipe, flexible insulation sheet and plastic film, ensuring that all components of the insulated pipe are kept firmly in place. This increases quality of the insulated pipe and facilitates handling thereof. In addition, the use of a flexible insulation sheet comprising a matrix material impregnated with an aerogel for the insulation of pipes also contributes to easy manufacturing of the pipes while achieving very good insulation performance.

### Short description of the drawings

Fig.1 shows an exemplary embodiment of the insulated pipe according to the invention in a perspective view (Fig. 1A) and in cross-sectional view (Fig. 1B).
Fig.2 shows an exemplary embodiment of the insulated pipe according to the invention in a perspective view (Fig. 2A) and in cross-sectional view (Fig. 2B).
Fig.3 shows an exemplary embodiment of an insulated pipe according to the invention with two inner pipes in a cross-sectional view.
Fig.4 shows another exemplary embodiment of an insulated pipe according to the invention with two inner pipes in a cross-sectional view.
Fig.5 shows another exemplary embodiment of an insulated pipe according to the invention with two inner pipes in a cross-sectional view.
Fig.6 shows another exemplary embodiment of an insulated pipe according to the invention with two inner pipes in a cross-sectional view.

### Detailed description of the invention

The use of a flexible insulation sheet comprising a matrix material impregnated with an aerogel for the insulation of pipes allows easy manufacturing of the pipes while achieving very good insulation performance, because of the use of the combination of the matrix material and the aerogel.

Aerogels are a class of synthetic porous ultralight materials derived from a gel, wherein the liquid component for the gel has been replaced with a gas, without significant collapse of the gel structure. Aerogels are solid and dry materials with very low density and very low thermal conductivity. Aerogels are structurally very strong due to their dendritic microstructure, in which spherical particles of average size 2-5 nm are fused to form clusters. These clusters form a three-dimensional highly porous solid network of almost fractal chains, with pores that are normally < 100 nm. The size and density of the pores can be controlled during the manufacturing process in ways known in the art.

The pores in an aerogel form pockets in which stagnant insulating gas, in particular air, may reside. An aerogel material can comprise from 50% to 99.98% by volume of insulating gas (particularly air) pockets in the porous solid network, but in practice most aerogels exhibit a porosity in the range of 90 and 99.8%. The gas in the pockets thus takes up the majority of space within the material.

Aerogels are good thermal insulators because they 1) almost nullify heat conduction because they are for the major part composed of insulating gas and 2) almost nullify heat convection because the porous microstructure prevents net gas movement, i.e. circulation is effectively impossible.

In addition, the flexible insulation sheet comprising a matrix material impregnated with an aerogel in the context of the invention is capable to withstand wide ranges of extremely low and high temperatures without sacrificing performance and lifetime.

Various aerogels are known in the art. In the context of the present invention the aerogels may be selected from any aerogel that has insulation properties. In the context of the present invention, it is preferred that the aerogel is a silica aerogel. Silica aerogels are the most common type of aerogel and can be derived from silica gel or by a modified Stober process. Silica aerogels are also commonly referred to as frozen smoke, solid smoke, solid air, solid cloud, or blue smoke, thanks to its translucent appearance. The silica aerogel comprises three-dimensional, intertwined clusters that may constitute for instance only 3% of the volume. Heat conduction through the solid is therefore very limited. The remaining volume may be composed of air in extremely small nanopores. In the context of the invention, these nanopores may suitably have a size between 20 and 50 nm. Because the air effectively cannot circulate, both convection and gas-phase conduction are highly reduced.

In accordance with the invention the aerogel is impregnated in a matrix material. The matrix material can be any material that allows to provide a flexible insulation sheet that can be wrapped around an inner pipe and which allows impregnation with the aerogel. In the context of the invention a textile material and in particular a non-woven textile material are very suitable. The combination of textile material avoids any problems associated with brittleness of the aerogel itself so that the composite structure has high insulation performance, high strength and high flexibility. In a preferred embodiment, the textile is composed of plastic fibers.

In a very suitable embodiment the flexible insulation sheet in the context of the invention comprises a non-woven textile of plastic fibers or inorganic fibers impregnated with silica aerogel, preferably inorganic fibers impregnated with silica aerogel. This results in a flexible blanket-like structure with a very low lambda value λ of 0,0135 to 0,019 W/m.K or even 0,0135 to 0,017 W/m.K at 20°C, which can be used in temperature ranges of -30 to 550°C, depending on the composition of the sheet. Generally, most silica aerogel based flexible insulation sheets may withstand temperature ranges of -30 to 200°C without any temperature induced deterioration. Especially when inorganic fibers are used, silica aerogel based flexible insulation sheets may withstand temperatures of up to to 550°C or even higher. This makes the insulation sheet suitable over a broad range of applications.

Due its high insulation performance the flexible insulation sheet in the context of the invention may be used as a relatively thin layer of highly insulating material. In this regard flexible insulation sheets for use in the present invention preferably have a thickness from 3 to 40 mm, more preferably 3 to 35 mm, most preferred 5 to 15 mm. In a suitable exemplary embodiment the flexible insulation sheet has a thickness of approximately 5 or 10 mm.

It is possible to use the flexible insulation sheet wrapped around the one or more inner pipes as one layer or multiple layers by wrapping it around the inner pipe multiple times. It is also possible to wrap a first flexible insulation sheet around at least one of the one or more inner pipes and then wrap a second flexible insulation sheet around the first, or to use even more of these sheets comprising a matrix material impregnated with an aerogel on top of each other. In other words, multiple of said flexible insulation sheets may be wrapped around at least one of the one or more inner pipes. This way, the inner pipe or inner pipes may be provided with one or multiple of these flexible insulation sheets, suitably 2 or 3 of these flexible insulation sheets. A flexible insulation sheet may also be wrapped around the inner pipe(s) in multiple windings so that also a multilayered flexible insulation sheet structure is achieved.

One of the advantages of using the flexible insulation sheet comprising a matrix material impregnated with an aerogel as disclosed herein is that it can in principle be of unlimited length so that it can be wrapped around the inner pipes so that it extends in its longitudinal direction in a continuous way. It is of course also possible that multiple of these flexible insulation sheets are abutted, preferably sealingly, to each other in longitudinal direction of the pipe. For this purpose, the abutting ends may be bound together by means of an adhesive or other fixing means.

The insulated pipe may contain one or more inner pipes. The one or more inner pipes may be composed of any material suitable for use of the intended purpose. For purposes of use in a heating system it is preferred that the one or more inner pipes are plastic pipes, because these materials are corrosion and temperature resistant and in general flexible to a certain extent while providing enough strength for the intended use. Suitable plastics in this regard are for instance polyolefine plastics. For instance, it is possible to use non-crosslinked polyolefines. Such non-crosslinked polyolefines may include selected polyethylene, such as PERT (polyethylene of raised temperature resistance), polypropylene, such as PPR, polybutene and mixtures thereof. A very suitable material is polybutene, a polymer made from a mixture of 1-butene, 2-butene and isobutylene. The advantage of using non-crosslinked polyolefines is that these are recyclable. It is also possible to use a cross-linked polyolefine as basis material for the one or more inner pipes, for instance cross-linked polyethylene (PEX) which has high flexibility and high temperature resistance. As a further example of a suitable material, high density polyethylene (HDPE) may suitably be used and may be preferred for cold and medium temperature applications. Such insulated pipes can be used for most thermal insulation purposes, including cold insulation systems and for heat insulation. In this sense, the invention relates also to a heating system comprising one or more insulated pipes according to the invention in connection with a heat source, for instance a district heating system. Likewise, the invention relates also to a cooling system comprising one or more insulated pipes according to the invention in connection with a cooling source, for instance an air conditioning system, or any other cooling system.

As mentioned above, the flexible insulation sheet in the context of the invention can be used in temperature ranges of -30 to 550°C, which makes the area of application very broad. Therefore, other material such as metal pipes may also be very suitable as inner pipes in the context of the invention. Suitable metal pipes may include pipes of steel, copper, etc., preferably steel pipes, for instance in off-shore applications.

Suitable inner pipes may be provided with a so-called diffusion barrier. For example, an aluminum foil can be used for the diffusion barrier. Alternatively or in addition, a layer of ethylene vinyl alcohol (EVOH), which is a formal copolymer of ethylene and vinyl alcohol, can be used as the diffusion barrier. A diffusion barrier may for instance be a foil glued to the outer surface of the one or more inner pipes. Such a diffusion barrier is resistant to humidity and prevents oxygen from entering the medium in the insulated pipes, which on its turn decreases the risk of oxidation of heating network components. In addition, or alternatively, the flexible insulation sheet comprising a matrix material impregnated with an aerogel as disclosed herein may be provided with such a diffusion barrier layer, in particular at the side that is the closest to the inner pipe(s).

The flexible insulation sheet comprising a matrix material impregnated with an aerogel as disclosed herein is wrapped around least one of the inner pipes. It is possible to wrap the sheet directly around the inner pipe(s) but it is also possible that one or more layers of material are provided between the flexible insulation sheet and the inner pipe or inner pipes.

Such layer(s) may include an adhesive layer for fixing the flexible insulation sheet to the inner pipe(s).

In addition, or alternatively, a diffusion barrier layer or a liner layer may be provided between the flexible insulation sheet and the inner pipe or inner pipes.

Because of the high insulation performance in combination with its capability to withstand wide ranges of extremely low and high temperatures without sacrificing insulation performance and lifetime it is preferred to position the flexible insulation sheet as close as possible to the inner pipe(s). The insulation performance of the sheet is best achieved in this way. However, it may sometimes be desirable to have an inner foam layer between the flexible insulation sheet, for instance if the pipe of the invention comprises multiple inner pipes and if the flexible insulation sheet is wrapped around multiple inner pipes. Such inner foam layer may be formed as a discrete or continuous foam layer between a flexible insulation sheet and one or more inner pipe (s).

In accordance with the present invention the insulated pipe further comprises one or more outer foam layers surrounding the flexible insulation sheet comprising a matrix material impregnated with an aerogel as disclosed herein, i.e. a foam layer surrounding said flexible insulation sheet. In this respect the method according to the invention also comprises arranging a foam layer around the flexible insulation sheet. This outer foam layer further increases thermal insulation.

The outer foam layer(s) is/are applied as discrete, separate foam layer(s). This allows flexibility in construction of the insulated pipe of the invention, because insulated pipes of various configurations can be made without necessitating substantial adaptations in the production line.

The material of the outer foam layer(s) may be selected from the same materials and have the same properties as for the first foam layer or may be different. If there are multiple inner foam layers they may also be selected from the same materials and have the same properties as for the first foam layer or may be different. If there are multiple outer foam layers they may also be selected from the same materials and have the same properties as for the first foam layer or may be different.

In a preferred embodiment the foam layer (s) are composed of a flexible foam. This allows bending of the insulation pipe of the invention without the risk of damages such as cracks.

Without limitation, suitable materials for the foam layer(s) may include foams common in the field of thermal insulation such as polyolefine foams, such as polyethylene foams (crosslinked or non-crosslinked), polyurethane foams, or phenolic foams. Foams may be open or closed cell foams depending on the desired insulation properties or anything in between.

Very suitable polyolefine insulation foams are the foams disclosed in WO 01/94092 A1, WO 02/42679 A1 or WO 2019/050402 A1 of the present applicant. These foams are flexible, recyclable and have excellent insulation properties.

In a preferred embodiment the foam of the first foam layer may be based on a non-crosslinked polyolefine foam. Such a foam is flexible, recyclable and has excellent insulation properties. Such foams are described and claimed for instance in WO 2019/050402 A1 of the present applicant.

The thickness of the inner foam layer may depend on its thermal insulation properties. For instance, if a foam as described in the example of WO 2019/050402 A1 is used a thickness of the first foam layer between 5 to 10 mm, such as 7,5 mm, would be suitable. In a suitable embodiment wherein the outer foam layer is a foam as described in the example of WO 2019/050402 A1 of the present applicant a thickness of the outer foam layer may be between 10 to 40 mm, such as 20 mm.

Instead of an inner foam layer, also an insulation material may be used that is not a foam. Available insulation materials known to the skilled person may be used for this purpose, including but not limited to rock wool, glass wool, flax or flax wool, etc.

In a further preferred embodiment the insulated pipe according to the invention further comprises an outer casing. In view of this the method of the invention may comprise also providing the insulated pipe with an outer casing, preferably a corrugated casing, for instance by extrusion and the use of a downstream corrugator.

The outer casing may be of the same material as the one or more inner pipes and may suitably be a plastic or metal casing. The outer casing may be a smooth film or an outer pipe, for instance a plastic outer pipe. It is preferred that said outer casing is a corrugated outer casing. Such a corrugated or ribbed casing has ribs extending over the circumference of the casing, which improves flexibility of the insulated pipe, while at the same time providing additional strength and thus protection from the environment surrounding it. A corrugated casing may be realized for instance as described in WO 02/31400 A1 of the present applicant.

The insulated pipes of the invention may suitably contain more layers of material or more components except for the above-mentioned layers and components, such as coatings, adhesives, fixating films or foils and the like. For instance, the inner pipe may consist of multiple layers and/or the flexible insulation sheet may comprise a coating layer and/or the foam layers may consist of multiple sublayers of foam.

As mentioned above the insulated pipe of the invention may comprise one or more inner pipes.

In a suitable embodiment the insulated pipe according to the invention comprises only one inner pipe arranged in a concentric manner with respect to the optional inner layer, the flexible insulation sheet, the optional second foam layer and the optional outer casing.

In a further embodiment the insulated pipe according to the invention comprises multiple inner pipes. For instance, it is very common to use an insulated pipe with two inner pipes. In this embodiment each pipe may be surrounded by a separate flexible insulation sheet as disclosed herein. If an outer foam layer is used this layer may surround all flexible insulation sheets. This applies also for the optional outer casing.

Another possibility is that said multiple inner pipes are surrounded by a common flexible insulation sheet comprising a matrix material impregnated with an aerogel as disclosed herein. In this case it is preferred that an inner foam layer is provided between the outer surface of said pipes and said common flexible insulation sheet. The inner foam layer may here be a single entity and/or continuous foam covering all inner pipes, thus filling the space between the inner pipes and the space between the inner pipes and the common flexible insulation sheet.

The flexible insulation sheet comprising a matrix material impregnated with an aerogel as disclosed herein can wrapped around the inner pipe(s) by wrapping a rectangular sheet of a desired length of said flexible insulation material around the inner pipe(s) and any optional layer of material covering the inner pipe(s) and fixing the ends to each other so that there is no gap or cleft in the longitudinal direction of the pipe between opposite ends of the flexible insulation sheet.

In the longitudinal seam it is possible that two opposite straight ends of the flexible insulation sheet abut each other and are put in a tight connection with regard to each other. This embodiment has advantages in the sense of production because it is very easy to manufacture straight cut flexible insulation sheets.

It is also possible that in the longitudinal seam one end of the flexible insulation sheet overlaps the opposite end. This keeps loss of overall insulation performance at a minimum. In a preferred embodiment, overlapping ends are cut at an angle between 20 and 70 °. Herein, the angles of the overlapping ends are preferably chosen such that in the area of overlap the overall thickness of sheet the area of overlap is not substantially increased or decreased with respect to the thickness of the remainder of the sheet, so as to ensure uniform insulation properties. In a practical and suitable embodiment each end has an angle of 45°, which is convenient in the sense of production because it is very easy to cut flexible insulation sheets under an angle and, importantly, the overlapping inclined end parts ensure maximal insulation performance.

It is also envisaged that the flexible insulation sheet is wrapped more than once around said one or more inner pipes any optional layer of material covering the inner pipe(s).

In accordance with the invention together the ends of the flexible insulation sheet at the longitudinal seam are joined by using an adhesive and/or fixation means. This entails in particular that a plastic foil or film, is wound tightly around the flexible insulation sheet, optionally provided with one or more liner and/or barrier layers, in order to fixate the flexible insulation sheet and to join the opposite ends in the longitudinal seam together.

This is done by wrapping a plastic film around the flexible insulation sheet in the form of helical winding. In accordance, the insulated pipe of the invention comprises a fixation means of plastic film that is wound around the flexible insulation sheet in the form of helical winding. This ensures proper fixation and positioning of the flexible insulation sheet and also compresses the sheet to a certain extent, which is advantageous in view of the pipe size.

Accordingly, the method for manufacturing an insulated pipe according to the invention comprises providing one or more inner pipes; wrapping said flexible insulation sheet around at least one of the one or more inner pipes; and joining together the ends of the flexible insulation sheet by wrapping a plastic film around the flexible insulation sheet in the form of helical winding such that the plastic film compresses the sheet.

If the pipe comprises multiple separate layers of said flexible insulation sheet, it is preferred that the ends of each flexible insulation sheet are joined by wrapping a plastic film around each flexible insulation sheet, in the form of helical winding, preferably such that the plastic film compresses each sheet.

In order to arrange a foam layer around the assembly of the inner pipe, flexible insulation sheet and plastic film, for instance as an outer foam layer, a foam layer is wrapped around the flexible insulation sheet by using a foam mat, which may be provided in a flat or pre-bent shape.

For this purpose, in a preferred and practical embodiment, a foam pipe or foam pipe profile may be provided, for instance by extrusion. The foam pipe may be cut open in longitudinal direction to form a "pre-bent" foam mat or a pipe profile. Such a pipe profile may be an opened foam pipe. The assembly comprising the inner pipe, flexible insulation sheet and plastic film can be arranged inside the opened foam pipe.

In accordance with the invention, the ends of the opened foam pipe or foam mat are subsequently be welded together to enclose the assembly comprising the inner pipe, flexible insulation sheet and plastic film in foam.

It is also possible that said foam pipe profile accommodates multiple pipe channels, preferably two pipe channels. In this case a foam pipe profile of multiple portions abutting each other may be arranged around the assemblies comprising the inner pipe, flexible insulation sheet and plastic film and the ends of the abutting foam pipe profile portions exposed to the outside are joined together by welding, to enclose the assemblies comprising the inner pipe, flexible insulation sheet and plastic film in foam. This profile may be provided, suitably by extrusion, and cut open at suitable places so that multiple assemblies comprising an inner pipe, flexible insulation sheet and plastic film can be arranged inside the opened foam pipe profile. In case of a foam pipe profile accommodating two channels the profile can be cut in two preferably symmetric parts with a cutting line through both channels. The opened foam profile may also be provided as separate parts, for instance by separate extrusion processes.

The foam profile may also be provided as a profile as a single part with different portions in which the above-mentioned assemblies can be accommodated. In such a case of a foam pipe profile accommodating multiple channels it is preferred to provide cuts from the outside of the profile for each channel, wherein the cuts extend only from the outer surface of the profile to each channel, while leaving the inner part of the profile intact. This ensures integrity of the profile and the assemblies comprising the inner pipe, flexible insulation sheet and plastic film can be positioned in the channels by inserting them via entries resulting from the cuts. In case of two channels in the profile, the profile can be cut from two sides with cuts extending from the outer surface of the profile to the channels, but not between the channels.

In this respect, said foam pipe profile of multiple portions may be provided as a profile with multiple channels for accommodating said assemblies, wherein the profile is provided with cuts from the outside of the profile for each channel, wherein the cuts extend only from the outer surface of the profile to each channel, while leaving the inner part of the profile intact, preferably, wherein the profile contains two channels and wherein the profile is cut from two sides with cuts extending from the outer surface of the profile to the channels, but not between the channels.

By welding the ends of the abutting portions of the foam pipe profile or the ends of the opened foam pipe or mat together, the plastic film surrounding the flexible insulation sheet directly underneath the foam melts or becomes locally weaker during the welding step, so that the compressed flexible insulation sheet is allowed to expand a bit. This way it is ensured that the foam layer fits tightly with the assembly of the inner pipe, flexible insulation sheet and plastic film, ensuring that all components of the insulated pipe are kept firmly in place. This increases quality of the insulated pipe and facilitates handling thereof.

Any additional adhesive and/or fixation means may be arranged over at least a seam part of at least one side of the flexible insulation sheet.

This can be done for instance by directly glueing the ends together.

The flexible insulation sheet, optionally provided with one or more liner and/or barrier layers, may for instance be glued directly to the inner pipe(s) or any layer of material covering the inner pipe(s) in order to fixate the flexible insulation sheet and to join the opposite ends in the longitudinal seam together. In addition, or alternatively a tape or layer may be glued to the outside of the flexible insulation sheet, optionally provided with one or more liner and/or barrier layers, in order to fixate the flexible insulation sheet and to join the opposite ends in the longitudinal seam together.

The invention also relates to the use of a flexible insulation sheet comprising a matrix material impregnated with an aerogel, for the insulation of pipes. Herein, the matrix material and/or aerogel is/are as defined above. The pipes may be used in any suitable technical area where insulation is needed, including cold insulation systems and heat insulation systems as explained above.

### Detailed description of the drawings

The invention will now be further elucidated in the attached drawings. The following explanation is meant to illustrate and explain the invention and not to limit the claims. The scale and size ratio of the components shown in the drawings may deviate from the actual scales and ratios.

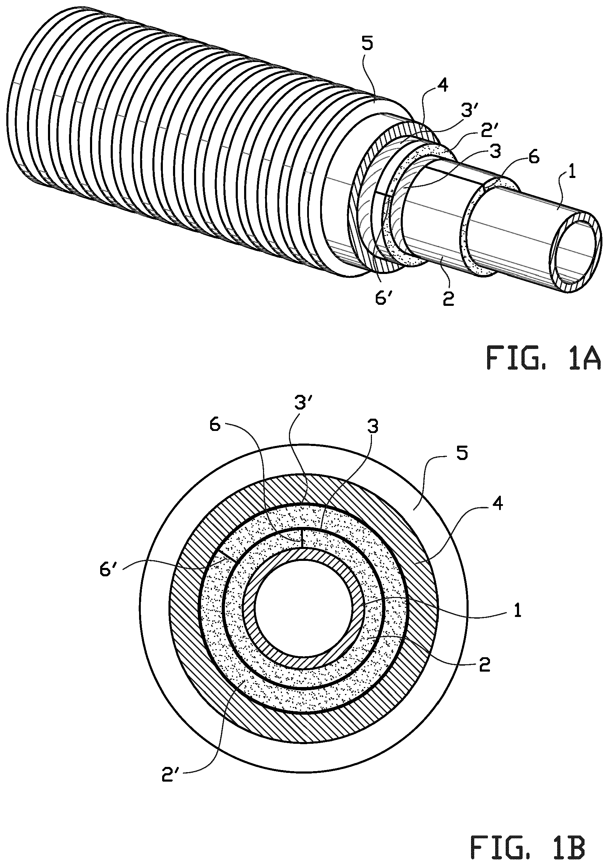

Fig. 1 shows a first exemplary embodiment of an insulated pipe according to the invention in a perspective view (Fig. 1A) and in cross-sectional view (Fig. 1B). In this embodiment two flexible insulation sheets 2, 2' are wrapped around an inner pipe 1. The flexible insulation sheet comprises a matrix material impregnated with an aerogel. The flexible insulation sheets may for instance be a non-woven textile of plastic fibers or inorganic impregnated with silica aerogel. This results in a flexible blanket-like structure of the sheets with a very low lambda value λ of 0,0135 to 0,019 W/m.K, or even of 0,0135 to 0,017 W/m.K at 20°C, which can be used in temperature ranges of -30 to 200 for plastic fibers and up to 550°C or higher for inorganic fibers. The use of two sheets is entirely optional. It is also possible to use one sheet wrapped around the inner pipe. As a fixation means a plastic film 3 is wound around flexible insulation sheet 2. A plastic film 3' is also wound around flexible insulation sheet 2'. Said plastic films 3, 3' are wound around the flexible insulation sheet 2, 2' in the form of a helical winding. An outer foam layer 4 surrounds the flexible insulation sheets 2, 2' and the plastic films 3, 3'. This outer foam layer 4 further increases thermal insulation. The insulated pipe further comprises an outer casing 5, preferably a corrugated casing, for instance provided by extrusion and the use of a downstream corrugator. In the longitudinal seams 6, 6' of the flexible insulation sheet two opposite straight ends of the flexible insulation sheet abut each other and are put in a tight connection with regard to each other, optionally using glue.

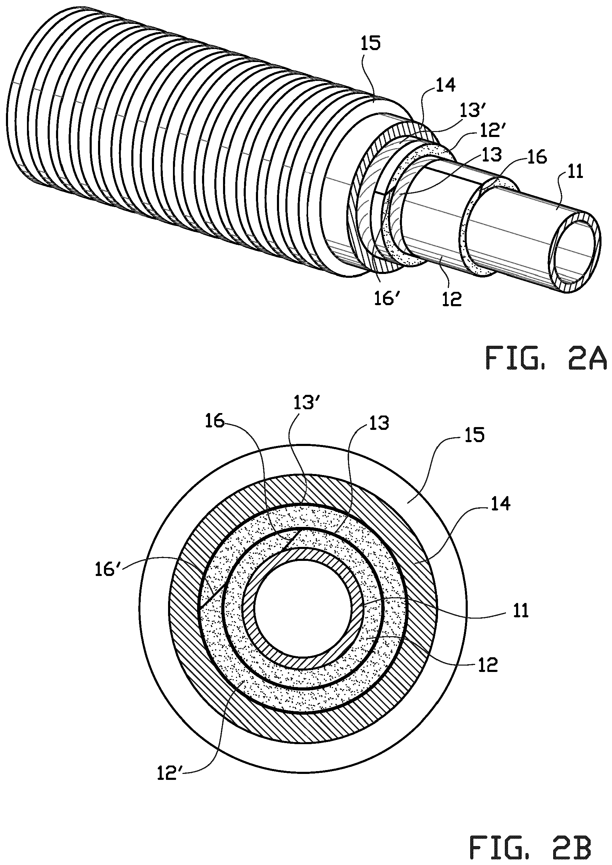

Fig. 2 shows a second exemplary embodiment of an insulated pipe according to the invention in a perspective view (Fig. 2A) and in cross-sectional view (Fig. 2B). This embodiment and its preferences are the same as the embodiment of Fig. 1 except for the ends of the flexible insulation sheet contacting each other in the longitudinal seam. In this embodiment two flexible insulation sheets 12, 12' are wrapped around an inner pipe 11. As a fixation means a plastic film 13, 13' is wound around each respective flexible insulation sheet 12, 12'in the form of helical winding. An outer foam layer 14 surrounds the flexible insulation sheets 12, 12' and the plastic films 13, 13'. The insulated pipe further comprises a corrugated outer casing 15. In the longitudinal seams 16, 16' of the flexible insulation overlapping ends are cut at an angle wherein each end has an angle of 45°, which is convenient in the sense of production because it is very easy to cut flexible insulation sheets under an angle and, importantly, the overlapping inclined end parts ensure maximal insulation performance. The ends may be glued together, although this is optional because the plastic film ensures proper positioning and fixation.

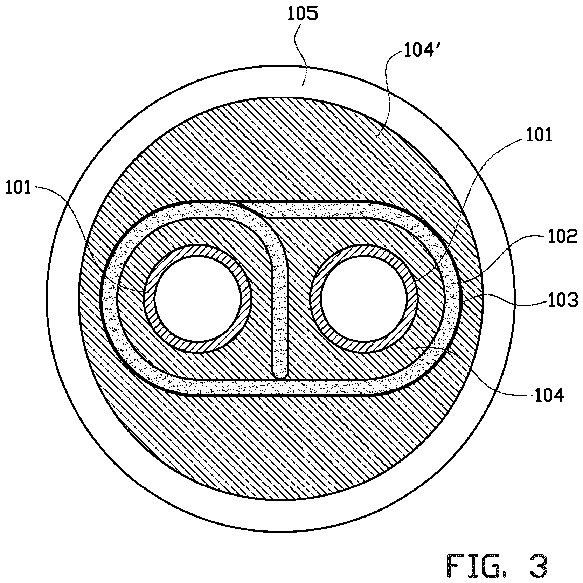

Fig. 3 shows a second exemplary embodiment of an insulated pipe according to the invention in cross-sectional view. In this embodiment two inner pipes 101 are comprised in the insulated pipe. The inner pipes are surrounded by an inner foam layer 104. A flexible insulation sheet 102 comprising a matrix material impregnated with an aerogel is wrapped around the two inner pipes 101 and the inner foam layer 104 such that one end of the sheet 102 extends between the two inner pipes 101. This ensures optimal insulation between the two inner pipes which is very advantageous in case the two pipes contain media with different temperatures and heat exchange between the inner pipes is undesirable. A plastic film 103 is wound around the flexible insulation sheet 102 in the form of helical winding. Around the plastic film 103 a second, outer foam layer 104' is arranged. The insulated pipe further comprises a corrugated outer casing 105.

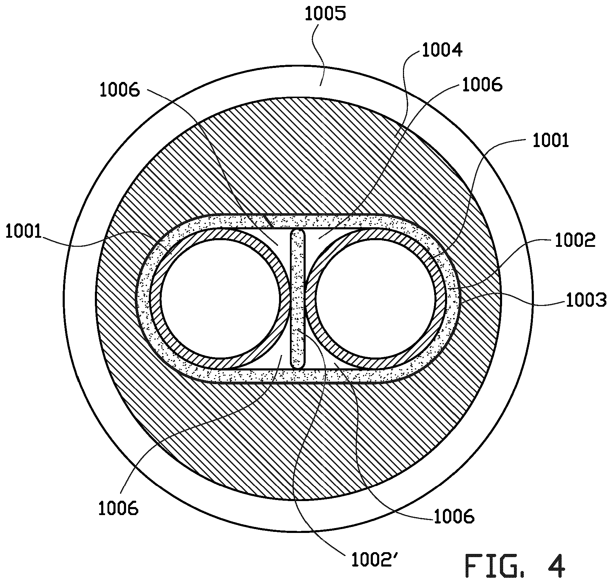

Fig. 4 shows a second exemplary embodiment of an insulated pipe according to the invention in cross-sectional view. In this embodiment two inner pipes 1001 are comprised in the insulated pipe. In this embodiment no inner foam layer is used. A flexible insulation sheet 1002 comprising a matrix material impregnated with an aerogel is wrapped around the two inner pipes 1001. In addition, a separate flexible insulation sheet 1002' comprising a matrix material impregnated with an aerogel is arranged between the two inner pipes 1001 to ensures optimal insulation between the two inner pipes which is very advantageous in case the two pipes contain media with different temperatures and heat exchange between the inner pipes is undesirable. The inner spaces 1006 between insulation sheets 1002, 1002' and the inner pipes 1001, may be filed with air or any other insulation material, including but not limited to blocks of insulation material. A plastic film 1003 is wound around the flexible insulation sheet 102 in the form of helical winding. Around the plastic film 1003 an outer foam layer 1004 is arranged. The insulated pipe further comprises a corrugated outer casing 1005.

Although not shown in detail in Figs. 1 - 4 outer foam layers 4, 14, 104', 1004, can be realized by arranging a foam mat or opened foam pipe around the assembly comprising the inner pipe(s) 1, 11, 101, 1001, flexible insulation sheet and plastic film; and the ends of the foam mat or opened foam pipe joining together by welding, to enclose the assembly comprising the respective inner pipe(s) 1 (Fig. 1), 11 (Fig.2), 101 (Fig. 3), 1001 (Fig. 4) flexible insulation sheet 2, 2' (Fig. 1) 12, 12' (Fig. 2) 102 (Fig 3), 1002 (Fig.4) and plastic film(s) 3 (Fig. 1), 13 (Fig. 2), 103 (Fig.3), 1003 (Fig.4) in foam. By welding the ends of the opened foam pipe or mat together the (outer) plastic film 3' (Fig. 1), 13' (Fig. 2), 103 (Fig.3), 1003 (Fig.4) surrounding the (outer) flexible insulation sheet 2' (Fig. 1), 12' (Fig. 2), 102 (Fig 3), 1002 (Fig.4) directly underneath the foam melts or becomes locally weaker during the welding step, so that the compressed (outer) flexible insulation sheet 2' (Fig. 1) 12' (Fig. 2), 102 (Fig 3), 1002 (Fig. 4) is allowed to expand a bit. This way it is ensured that all components of the insulated pipe are kept firmly in place. This increases quality of the insulated pipe and facilitates handling thereof.

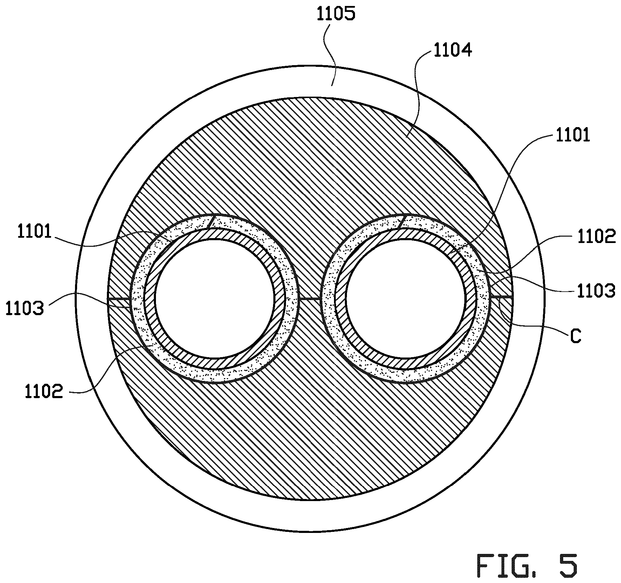

Fig. 5 shows another exemplary embodiment of an insulated pipe according to the invention with two inner pipes in a cross-sectional view. It comprises two inner pipes 1101. Flexible insulation sheets 1102 are wrapped around each of the inner pipes 1101, wherein each flexible insulation sheet comprises a matrix material impregnated with an aerogel. The ends of the flexible insulation sheets 1102 are joined together by plastic films 1103 wrapped around the flexible insulation sheets in the form of helical winding such that the plastic films 1103 compress the sheet 1102. This way forming assemblies comprising the inner pipe 1101, flexible insulation sheet 1102 and plastic film 1103 are formed. These assemblies are surrounded by an outer foam profile 1104. This outer foam profile 1104 is arranged around the assemblies comprising the inner pipe 1101, flexible insulation sheet 1102 and plastic film 1103. The foam pipe profile accommodates two pipe channels and may suitably be provided by extrusion and cut in two preferably symmetric portions with a cutting line C. Both ends of the abutting foam pipe profile portions exposed to the outside are joined together at cutting line C by welding, to enclose the assemblies comprising the inner pipe 1101, flexible insulation sheet 1102 and plastic film 1103 in foam profile 1104. The opened foam profile portions may also be provided as separate parts, for instance by separate extrusion processes. The insulated pipe further comprises a corrugated outer casing 1105. Just like in the embodiments shown in Fig. 1 to 4, also in the embodiment in Fig. 5 welding the ends of the foam pipe profile portions exposed to the outside together results in that the plastic films 1103 surrounding the flexible insulation sheets 1102 directly underneath the foam 1104 melts or becomes locally weaker during the welding step, so that the compressed flexible insulation sheets 1102 are allowed to expand a bit. This way it is ensured that all components of the insulated pipe are kept firmly in place. This increases quality of the insulated pipe and facilitates handling thereof.

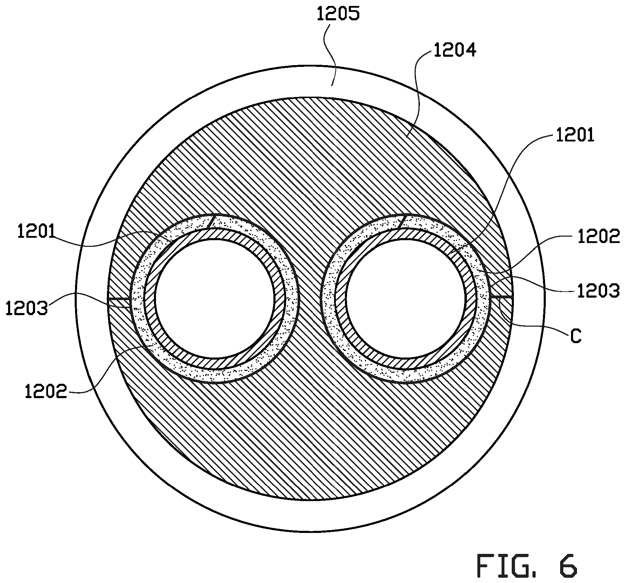

Fig. 6 shows another exemplary embodiment of an insulated pipe according to the invention with two inner pipes in a cross-sectional view. The embodiment of Fig.6 and its manufacturing basically corresponds to that of Fig. 5 with the exception that the outer foam profile 1204 is cut from two sides with cuts C extending from the outer surface of the profile to the channels accommodating comprising assemblies comprising the inner pipe 1201, flexible insulation sheet 1202 and plastic film 1203, but not between the channels. The corrugated outer casing is indicated with number 1205.

## Claims

1. An insulated pipe, comprising
one or more inner pipes (1, 11, 101, 1001);
a flexible insulation sheet (2, 2', 12, 12', 102, 1002) wrapped around at least one of the one or more inner pipes (1, 11, 101, 1001), wherein said flexible insulation sheet (2, 2', 12, 12', 102, 1002) comprises a matrix material impregnated with an aerogel, wherein the ends of the flexible insulation sheet (2, 2', 12, 12', 102, 1002) are joined together by a plastic film (3, 3', 13, 13', 103, 1003) wrapped around the flexible insulation sheet (2, 2', 12, 12', 102, 1002) in the form of helical winding such that the plastic film (3, 3', 13, 13', 103, 1003) compresses the flexible insulation sheet (2, 2', 12, 12', 102, 1002); thereby forming an assembly comprising the inner pipe (1, 11, 101, 1001), flexible insulation sheet (2, 2', 12, 12', 102, 1002) and plastic film (3, 3', 13, 13', 103, 1003); and
comprising a foam mat or opened foam pipe profile (4, 14, 104', 1004) arranged around the assembly comprising the inner pipe (1, 11, 101, 1001), flexible insulation sheet (2, 2', 12, 12', 102, 1002) and plastic film (3, 3', 13, 13', 103, 1003); wherein the ends of the foam mat or opened foam pipe profile (4, 14, 104', 1004) have been joined together by welding, to enclose the assembly comprising the inner pipe (1, 11, 101, 1001), flexible insulation sheet (2, 2', 12, 12', 102, 1002) and plastic film (3, 3', 13, 13', 103, 1003) in foam (4, 14, 104', 1004).

2. The insulated pipe according to claim 1, wherein the insulated pipe comprises two or more inner pipes, preferably two inner pipes (101, 1001).

3. The insulated pipe according to claim 2, wherein each inner pipe (101, 1001) is surrounded by said flexible insulation sheet (104', 1004).

4. An insulated pipe, comprising
multiple inner pipes (1101, 1201);
a flexible insulation sheet (1102, 1202) wrapped around each of the inner pipes (1101, 1201), wherein said flexible insulation sheet (1102, 1202) comprises a matrix material impregnated with an aerogel, **characterized in that** the ends of the flexible insulation sheet (1102, 1202) are joined together by a plastic film (1103, 1203) wrapped around the flexible insulation sheet (1102, 1102) in the form of helical winding such that the plastic film (1103, 1203) compresses the flexible insulation sheet (1102, 1202); thereby forming multiple assemblies comprising the inner pipe (1101, 1201), flexible insulation sheet (1102, 1202) and plastic film (1103, 1203); and
comprising a foam pipe profile of multiple portions (1104, 1204) abutting each other arranged around the assemblies comprising the inner pipe (1101, 1201), flexible insulation sheet (1102, 1202) and plastic film (1103, 1203); wherein the ends of the abutting foam pipe profile portions exposed to the outside have been joined together by welding, to enclose the assemblies comprising the inner pipe (1101, 1201), flexible insulation sheet (1102, 1202) and plastic film (1103, 1203) in foam (1104, 1204).

5. The insulated pipe according to any of the previous claims, wherein said matrix material is a textile material, preferably wherein said textile material is a non-woven material, in particular wherein the non-woven material is composed of plastic fibers.

6. The insulated pipe according to any of the previous claims, wherein said aerogel is a silica aerogel.

7. The insulated pipe according to the previous claims, wherein multiple of said flexible insulation sheets (2, 2', 12, 12') are wrapped around at least one of the one or more inner pipes, preferably 2 or 3 of said flexible insulation sheets.

8. The insulated pipe according to any of the previous claims, further comprising an outer casing (5, 15, 105, 1005, 1105, 1205), preferably wherein the outer casing is a corrugated outer casing.

9. A method for manufacturing an insulated pipe, comprising
providing one or more inner pipes (1, 11, 101, 1001);
wrapping a flexible insulation sheet (2, 2', 12, 12', 102, 1002) around at least one of the one or more inner pipes (1, 11, 101, 1001), wherein said flexible insulation sheet (2, 2', 12, 12', 102, 1002) comprises a matrix material impregnated with an aerogel;
joining together the ends of the flexible insulation sheet (2, 2', 12, 12', 102, 1002)wherein joining the ends of the flexible insulation sheet (2, 2', 12, 12', 102, 1002) together comprises wrapping a plastic film around the flexible insulation sheet (2, 2', 12, 12', 102, 1002) in the form of a helical winding such that the plastic film (3, 3', 13, 13', 103, 1003) compresses the flexible insulation sheet (2, 2', 12, 12', 102, 1002); thereby forming an assembly comprising the inner pipe (1, 11, 101, 1001), flexible insulation sheet (2, 2', 12, 12', 102, 1002) and plastic film (3, 3', 13, 13', 103, 1003);
providing a foam mat or opened foam pipe profile (4, 14, 104', 1004); arranging said foam mat or opened foam pipe profile (4, 14, 104', 1004) around the assembly comprising the inner pipe (1, 11, 101, 1001), flexible insulation sheet (2, 2', 12, 12', 102, 1002) and plastic film (3, 3', 13, 13', 103, 1003); and
joining the ends of the foam mat or opened foam pipe profile (4, 14, 104', 1004) together by welding, to enclose the assembly comprising the inner pipe (1, 11, 101, 1001), flexible insulation sheet (2, 2', 12, 12', 102, 1002) and plastic film (3, 3', 13, 13', 103, 1003) in foam (4, 14, 104', 1004).

10. Method according to claim 9, comprising
providing one or more inner pipes (1, 11, 101, 1001);
wrapping said flexible insulation sheet (2, 2', 12, 12', 102, 1002) around at least one of the one or more inner pipes (1, 11, 101, 1001); and joining together the ends of the flexible insulation sheet (2, 2', 12, 12', 102, 1002) wherein joining the ends of the flexible insulation sheet (2, 2', 12, 12', 102, 1002) together comprises wrapping a plastic film (3, 3', 13, 13', 103, 1003) around the flexible insulation sheet (2, 2', 12, 12', 102, 1002) in the form of a helical winding such that the plastic film (3', 13', 103, 1003) compresses the sheet; thereby forming an assembly comprising the inner pipe (1, 11, 101, 1001), flexible insulation sheet (2, 2', 12, 12', 102, 1002) and plastic film (3, 3', 13, 13', 103, 1003);
providing a foam pipe (4, 14, 104', 1004), for instance by extrusion;
cutting open said foam pipe (4, 14, 104', 1004) in longitudinal direction;
arranging the assembly comprising the inner pipe (1, 11, 101, 1001), flexible insulation sheet (2, 2', 12, 12', 102, 1002) and plastic film (3, 3', 13, 13', 103, 1003) inside the opened foam pipe (4, 14, 104', 1004); and
welding the ends of the opened foam pipe (4, 14, 104', 1004) together to enclose the assembly comprising the inner pipe (1, 11, 101, 1001), flexible insulation sheet (2, 2', 12, 12', 102, 1002) and plastic film (3, 3', 13, 13', 103, 1003) in foam (4, 14, 104', 1004).

11. Method according to claim 9, comprising
providing one or more inner pipes (1, 11, 101, 1001);
wrapping said flexible insulation sheet (2, 2', 12, 12', 102, 1002) around at least one of the one or more inner pipes (1, 11, 101, 1001);
joining together the ends of the flexible insulation sheet (2, 2', 12, 12', 102, 1002) wherein joining the ends of the flexible insulation sheet (2, 2', 12, 12', 102, 1002) together comprises wrapping a plastic film (3, 3', 13, 13', 103, 1003) around the flexible insulation sheet (2, 2', 12, 12', 102, 1002) in the form of a helical winding such that the plastic film (3', 13', 103, 1003) compresses the flexible insulation sheet (2, 2', 12, 12', 102, 1002); thereby forming an assembly comprising the inner pipe (1, 11, 101, 1001), flexible insulation sheet (2, 2', 12, 12', 102, 1002) and plastic film (3, 3', 13, 13', 103, 1003);
providing a foam mat (4, 14, 104', 1004);
arranging said foam mat (4, 14, 104', 1004) around the assembly comprising the inner pipe (1, 11, 101, 1001), flexible insulation sheet (2, 2', 12, 12', 102, 1002) and plastic film (3, 3', 13, 13', 103, 1003); and
joining the ends of the foam mat (4, 14, 104', 1004) together by welding, to enclose the assembly comprising the inner pipe (1, 11, 101, 1001), flexible insulation sheet (2, 2', 12, 12', 102, 1002) and plastic film (3, 3', 13, 13', 103, 1003) in foam (4, 14, 104', 1004).

12. A method for manufacturing an insulated pipe comprising
providing multiple inner pipes (1101, 1201);
wrapping a flexible insulation sheet (1102, 1202) around each of the inner pipes (1101, 1201), wherein said flexible insulation sheet (1102, 1202) comprises a matrix material impregnated with an aerogel;
joining together the ends of the flexible insulation sheets (1102, 1202) wherein joining the ends of the flexible insulation sheets (1102, 1202) together comprises wrapping a plastic film (1103, 1203) around each flexible insulation sheet (1102, 1202) in the form of a helical winding such that the plastic films (1103, 1203) compress the flexible insulation sheets (1102, 1202); thereby forming assemblies comprising an inner pipe (1101, 1201), flexible insulation sheet (1102, 1202) and plastic film (1103, 1203);
providing a foam pipe profile of multiple portions (1104, 1204); arranging said foam pipe profile (1104, 1204) around the assemblies comprising the inner pipe (1101, 1201), flexible insulation sheet (1102, 1202) and plastic film (1103, 1203) so that said multiple portions abut each other;
joining the ends of the abutting foam pipe profile portions exposed to the outside together by welding to enclose the assemblies comprising the inner pipe (1101, 1201), flexible insulation sheet (1102, 1202) and plastic film (1103, 1203) in foam (1104, 1204).

13. Method according to claim 12, wherein said foam pipe profile (1104, 1204) of multiple portions is provided as a profile with multiple channels for accommodating said assemblies, wherein the profile is provided with cuts from the outside of the profile for each channel, wherein the cuts extend only from the outer surface of the profile to each channel, while leaving the inner part of the profile intact, preferably, wherein the foam pipe profile (1204) contains two channels and wherein the profile is cut from two sides with cuts extending from the outer surface of the profile to the channels, but not between the channels.

14. The method according to any of the claims 9 to 13, further comprising providing the insulated pipe with an outer casing (5, 15, 105, 1005, 1105, 1205), preferably a corrugated casing.

15. A heating or cooling system comprising one or more insulated pipes according to any of the claims 1 to 8 in connection with a respective heat source or cooling source.

## Patentansprüche

1. Isoliertes Rohr, umfassend
ein oder mehr innere Rohre (1, 11, 101, 1001);
eine flexible Isolierfolie (2, 2', 12, 12', 102, 1002), die um mindestens eines des einen oder der mehreren inneren Rohre (1, 11, 101, 1001) gewickelt ist, wobei die flexible Isolierfolie (2, 2', 12, 12', 102, 1002) ein Matrixmaterial umfasst, das mit einem Aerogel imprägniert ist, wobei die Enden der flexiblen Isolierfolie (2, 2', 12, 12', 102, 1002) durch eine Kunststofffolie (3, 3', 13, 13', 103, 1003) miteinander verbunden sind, die in Form einer spiralförmigen Wicklung derart um die flexible Isolierfolie (2, 2', 12, 12', 102, 1002) gewickelt ist, dass die Kunststofffolie (3, 3', 13, 13', 103, 1003) die flexible Isolierfolie (2, 2', 12, 12', 102, 1002) komprimiert, wodurch eine Anordnung gebildet wird, die das innere Rohr (1, 11, 101, 1001), die flexible Isolierfolie (2, 2', 12, 12', 102, 1002) und die Kunststofffolie (3, 3', 13, 13', 103, 1003) umfasst; und
umfassend eine Schaumstoffmatte oder ein offenes Schaumstoffrohrprofil (4, 14, 104', 1004), die bzw. das um die Anordnung angeordnet ist, die das innere Rohr (1, 11, 101, 1001), die flexible Isolierfolie (2, 2', 12, 12', 102, 1002) und die Kunststofffolie (3, 3', 13, 13', 103, 1003) umfasst; wobei die Enden der Schaumstoffmatte oder des offenen Schaumstoffrohrprofils (4, 14, 104', 1004) durch Schweißen miteinander verbunden wurden, um die Anordnung, die das innere Rohr(1, 11, 101, 1001), die flexible Isolierfolie (2, 2', 12, 12', 102, 1002) und die Kunststofffolie (3, 3', 13, 13', 103, 1003) umfasst, in Schaumstoff (4, 14, 104', 1004) einzuschließen.

2. Isoliertes Rohr nach Anspruch 1, wobei das isolierte Rohr zwei oder mehr innere Rohre, vorzugsweise zwei innere Rohre (101, 1001), umfasst.

3. Isoliertes Rohr nach Anspruch 2, wobei jedes innere Rohr (101, 1001) von der flexiblen Isolierfolie (104', 1004) umgeben wird.

4. Isoliertes Rohr, umfassend mehrere innere Rohre (1101, 1201);
eine flexible Isolierfolie (1102, 1202), die um jedes der inneren Rohre (1101, 1201) gewickelt ist, wobei die flexible Isolierfolie (1102, 1202) ein Matrixmaterial umfasst, das mit einem Aerogel imprägniert ist, **dadurch gekennzeichnet, dass** die Enden der flexiblen Isolierfolie (1102, 1202) durch eine Kunststofffolie (1103, 1203) miteinander verbunden sind, die in Form einer spiralförmigen Wicklung derart um die flexible Isolierfolie (1102, 1102) gewickelt ist, dass die Kunststofffolie (1103, 1203) die flexible Isolierfolie (1102, 1202) komprimiert, wodurch mehrere Anordnungen gebildet werden, die das innere Rohr (1101, 1201), die flexible Isolierfolie (1102, 1202) und die Kunststofffolie (1103, 1203) umfassen; und
umfassend ein Schaumstoffrohrprofil aus mehreren aneinander anliegenden Abschnitten (1104, 1204), die um die Anordnungen angeordnet sind, die das innere Rohr (1101, 1201), die flexible Isolierfolie (1102, 1202) und die Kunststofffolie (1103, 1203) umfassen; wobei die Enden der anliegenden Schaumstoffrohrprofilabschnitte, die nach außen freiliegen, durch Schweißen miteinander verbunden wurden, um die Anordnungen, die das innere Rohr (1101, 1201), die flexible Isolierfolie (1102, 1202) und die Kunststofffolie (1103, 1203) umfassen, in Schaumstoff (1104, 1204) einzuschließen.

5. Isoliertes Rohr nach einem der vorhergehenden Ansprüche, wobei das Matrixmaterial ein Textilmaterial ist, vorzugsweise wobei das Textilmaterial ein Vliesstoff ist, insbesondere wobei der Vliesstoff aus Kunststofffasern besteht.

6. Isoliertes Rohr nach einem der vorhergehenden Ansprüche, wobei das Aerogel ein Siliziumdioxid-Aerogel ist.

7. Isoliertes Rohr nach den vorhergehenden Ansprüchen, wobei mehrere der flexiblen Isolierfolien (2, 2', 12, 12') um mindestens eines des einen oder der mehreren inneren Rohre, vorzugsweise 2 oder 3 der flexiblen Isolierfolien, gewickelt sind.

8. Isoliertes Rohr nach einem der vorhergehenden Ansprüche, ferner umfassend eine Außenhülle (5, 15, 105, 1005, 1105, 1205), vorzugsweise wobei die Außenhülle eine gewellte Außenhülle ist.

9. Verfahren zur Herstellung eines isolierten Rohrs, umfassend das Bereitstellen eines oder mehrerer innerer Rohre (1, 11, 101, 1001);
das Wickeln einer flexiblen Isolierfolie (2, 2', 12, 12', 102, 1002) um mindestens eines des einen oder der mehreren inneren Rohre (1, 11, 101, 1001), wobei die flexible Isolierfolie (2, 2', 12, 12', 102, 1002) ein mit einem Aerogel imprägniertes Matrixmaterial umfasst;
das Verbinden der Enden der flexiblen Isolierfolie (2, 2', 12, 12', 102, 1002) miteinander, wobei das Verbinden der Enden der flexiblen Isolierfolie (2, 2', 12, 12', 102, 1002) miteinander das Wickeln einer Kunststofffolie in Form einer spiralförmigen Wicklung derart um die flexible Isolierfolie (2, 2', 12, 12', 102, 1002) umfasst, dass die Kunststofffolie (3, 3', 13, 13', 103, 1003) die flexible Isolierfolie (2, 2', 12, 12', 102, 1002) komprimiert, wodurch eine Anordnung gebildet wird, die das innere Rohr (1, 11, 101, 1001), die flexible Isolierfolie (2, 2', 12, 12', 102, 1002) und die Kunststofffolie (3, 3', 13, 13', 103, 1003) umfasst;
das Bereitstellen einer Schaumstoffmatte oder eines offenen Schaumstoffrohrprofils (4, 14, 104', 1004); das Anordnen der Schaumstoffmatte oder des offenen Schaumstoffrohrprofils (4, 14, 104', 1004) um die Anordnung, die das innere Rohr (1, 11, 101, 1001), die flexible Isolierfolie (2, 2', 12, 12', 102, 1002) und die Kunststofffolie (3, 3', 13, 13', 103, 1003) umfasst; und
das Verbinden der Enden der Schaumstoffmatte oder des offenen Schaumstoffrohrprofils (4, 14, 104', 1004) durch Schweißen miteinander, um die Anordnung, die das innere Rohr (1, 11, 101, 1001), die flexible Isolierfolie (2, 2', 12, 12', 102, 1002) und die Kunststofffolie (3, 3', 13, 13', 103, 1003) umfasst, in Schaumstoff (4, 14, 104', 1004) einzuschließen.

10. Verfahren nach Anspruch 9, umfassend das Bereitstellen eines oder mehrerer innerer Rohre (1, 11, 101, 1001);
das Wickeln der flexiblen Isolierfolie (2, 2', 12, 12', 102, 1002) um mindestens eines des einen oder der mehreren inneren Rohre (1, 11, 101, 1001); und das Verbinden der Enden der flexiblen Isolierfolie (2, 2', 12, 12', 102, 1002) miteinander, wobei das Verbinden der Enden der flexiblen Isolierfolie (2, 2', 12, 12', 102, 1002) miteinander das Wickeln einer Kunststofffolie (3, 3', 13, 13', 103, 1003) in Form einer spiralförmigen Wicklung derart um die flexible Isolierfolie (2, 2', 12, 12', 102, 1002) umfasst, dass die Kunststofffolie (3', 13', 103, 1003) die Folie komprimiert, wodurch eine Anordnung gebildet wird, die das innere Rohr (1, 11, 101, 1001), die flexible Isolierfolie (2, 2', 12, 12', 102, 1002) und die Kunststofffolie (3, 3', 13, 13', 103, 1003) umfasst;
das Bereitstellen eines Schaumstoffrohrs (4, 14, 104', 1004), beispielsweise durch Extrusion;
das Aufschneiden des Schaumstoffrohrs (4, 14, 104', 1004) in Längsrichtung;
das Anordnen der Anordnung, die das innere Rohr (1, 11, 101, 1001), die flexible Isolierfolie (2, 2', 12, 12', 102, 1002) und die Kunststofffolie (3, 3', 13, 13', 103, 1003) umfasst, in dem offenen Schaumstoffrohr (4, 14, 104', 1004); und
das Zusammenschweißen der Enden des offenen Schaumstoffrohrs (4, 14, 104', 1004), um die Anordnung, die das innere Rohr (1, 11, 101, 1001), die flexible Isolierfolie (2, 2', 12, 12', 102, 1002) und die Kunststofffolie (3, 3', 13, 13', 103, 1003) umfasst, in Schaumstoff (4, 14, 104', 1004) einzuschließen.

11. Verfahren nach Anspruch 9, umfassend
das Bereitstellen eines oder mehrerer innerer Rohre (1, 11, 101, 1001);
das Wickeln der flexiblen Isolierfolie (2, 2', 12, 12', 102, 1002) um mindestens eines des einen oder der mehreren inneren Rohre (1, 11, 101, 1001);
das Verbinden der Enden der flexiblen Isolierfolie (2, 2', 12, 12', 102, 1002) miteinander, wobei das Verbinden der Enden der flexiblen Isolierfolie (2, 2', 12, 12', 102, 1002) miteinander das Wickeln einer Kunststofffolie (3, 3', 13, 13', 103, 1003) in Form einer spiralförmigen Wicklung derart um die flexible Isolierfolie (2, 2', 12, 12', 102, 1002) umfasst, dass die Kunststofffolie (3', 13', 103, 1003) die flexible Isolierfolie (2, 2', 12, 12', 102, 1002) komprimiert, wodurch eine Anordnung gebildet wird, die das innere Rohr (1, 11, 101, 1001), die flexible Isolierfolie (2, 2', 12, 12', 102, 1002) und die Kunststofffolie (3, 3', 13, 13', 103, 1003) umfasst;
das Bereitstellen einer Schaumstoffmatte (4, 14, 104', 1004);
das Anordnen der Schaumstoffmatte (4, 14, 104', 1004) um die Anordnung, die das innere Rohr (1, 11, 101, 1001), die flexible Isolierfolie (2, 2', 12, 12', 102, 1002) und die Kunststofffolie (3, 3', 13, 13', 103, 1003) umfasst; und
das Verbinden der Enden der Schaumstoffmatte (4, 14, 104', 1004) durch Schweißen miteinander, um die Anordnung, die das innere Rohr (1, 11, 101, 1001), die flexible Isolierfolie (2, 2', 12, 12', 102, 1002) und die Kunststofffolie (3, 3', 13, 13', 103, 1003) umfasst, in Schaumstoff (4, 14, 104', 1004) einzuschließen.

12. Verfahren zur Herstellung eines isolierten Rohrs, umfassend das Bereitstellen mehrerer innerer Rohre (1101, 1201);
das Wickeln einer flexiblen Isolierfolie (1102, 1202) um jedes der inneren Rohre (1101, 1201), wobei die flexible Isolierfolie (1102, 1202) ein mit einem Aerogel imprägniertes Matrixmaterial umfasst;
das Verbinden der Enden der flexiblen Isolierfolien (1102, 1202) miteinander, wobei das Verbinden der Enden der flexiblen Isolierfolien (1102, 1202) miteinander das Wickeln einer Kunststofffolie (1103, 1203) in Form einer spiralförmigen Wicklung derart um jede flexible Isolierfolie (1102, 1202) umfasst, dass die Kunststofffolien (1103, 1203) die flexiblen Isolierfolien (1102, 1202) komprimieren, wodurch Anordnungen gebildet werden, die ein inneres Rohr (1101, 1201), eine flexible Isolierfolie (1102, 1202) und eine Kunststofffolie (1103, 1203) umfassen;
das Bereitstellen eines Schaumstoffrohrprofils aus mehreren Abschnitten (1104, 1204); das Anordnen des Schaumstoffrohrprofils (1104, 1204) derart um die Anordnungen, die das innere Rohr (1101, 1201), die flexible Isolierfolie (1102, 1202) und die Kunststofffolie (1103, 1203) umfassen, dass die mehreren Abschnitte aneinander anliegen;
das Verbinden der Enden der anliegenden Schaumstoffrohrprofilabschnitte, die nach außen freiliegen, durch Schweißen miteinander, um die Anordnungen, die das innere Rohr (1101, 1201), die flexible Isolierfolie (1102, 1202) und die Kunststofffolie (1103, 1203) umfassen, in Schaumstoff (1104, 1204) einzuschließen.

13. Verfahren nach Anspruch 12, wobei das Schaumstoffrohrprofil (1104, 1204) aus mehreren Abschnitten mit einem Profil mit mehreren Kanälen zum Unterbringen der Anordnungen versehen ist, wobei das Profil mit Einschnitten von der Außenseite des Profils für jeden Kanal versehen ist, wobei die Einschnitte nur von der Außenfläche des Profils bis zu jedem Kanal verlaufen, während der innere Teil des Profils intakt gelassen wird, vorzugsweise, wobei das Schaumstoffrohrprofil (1204) zwei Kanäle enthält und wobei das Profil von zwei Seiten her eingeschnitten wird, wobei die Einschnitte von der Außenfläche des Profils bis zu den Kanälen, aber nicht zwischen den Kanälen verlaufen.

14. Verfahren nach einem der Ansprüche 9 bis 13, ferner umfassend das Versehen des isolierten Rohrs mit einer Außenhülle (5, 15, 105, 1005, 1105, 1205), vorzugsweise einer gewellten Hülle.

15. Heiz- oder Kühlsystem, umfassend ein oder mehr isolierte Rohre nach einem der Ansprüche 1 bis 8 in Verbindung mit einer entsprechenden Wärmequelle oder Kältequelle.

## Revendications

1. - Tuyau isolé, comprenant
un ou plusieurs tuyaux internes (1, 11, 101, 1001) ;
une feuille d'isolation flexible (2, 2', 12, 12', 102, 1002) enroulée autour d'au moins l'un du ou des tuyaux internes (1, 11, 101, 1001), ladite feuille d'isolation flexible (2, 2', 12, 12', 102, 1002) comprenant un matériau de matrice imprégné d'un aérogel, les extrémités de la feuille d'isolation flexible (2, 2', 12, 12', 102, 1002) étant réunies ensemble par un film plastique (3, 3', 13, 13', 103, 1003) enroulé autour de la feuille d'isolation flexible (2, 2', 12, 12', 102, 1002) sous la forme d'un enroulement hélicoïdal de telle sorte que le film plastique (3, 3', 13, 13', 103, 1003) comprime la feuille d'isolation flexible (2, 2', 12, 12', 102, 1002) ; formant ainsi un ensemble comprenant le tuyau interne (1, 11, 101, 1001), la feuille d'isolation flexible (2, 2', 12, 12', 102, 1002) et le film plastique (3, 3', 13, 13', 103, 1003) ; et
comprenant un mat de mousse ou profilé de tuyau en mousse ouvert (4, 14, 104', 1004) disposé autour de l'ensemble comprenant le tuyau interne (1, 11, 101, 1001), la feuille d'isolation flexible (2, 2', 12, 12', 102, 1002) et le film plastique (3, 3', 13, 13', 103, 1003) ; les extrémités du mat de mousse ou profilé de tuyau en mousse ouvert (4, 14, 104', 1004) ayant été réunies ensemble par soudage, pour enfermer l'ensemble comprenant le tuyau interne (1, 11, 101, 1001), la feuille d'isolation flexible (2, 2', 12, 12', 102, 1002) et le film plastique (3, 3', 13, 13', 103, 1003) dans de la mousse (4, 14, 104', 1004).

2. - Tuyau isolé selon la revendication 1, dans lequel le tuyau isolé comprend au moins deux tuyaux internes, de préférence deux tuyaux internes (101, 1001).

3. - Tuyau isolé selon la revendication 2, dans lequel chaque tuyau interne (101, 1001) est entouré par ladite feuille d'isolation flexible (104', 1004).

4. - Tuyau isolé comprenant
plusieurs tuyaux internes (1101, 1201) ;
une feuille d'isolation flexible (1102, 1202) enroulée autour de chacun des tuyaux internes (1101, 1201), ladite feuille d'isolation flexible (1102, 1202) comprenant un matériau de matrice imprégné d'un aérogel, **caractérisé par le fait que** les extrémités de la feuille d'isolation flexible (1102, 1202) sont réunies ensemble par un film plastique (1103, 1203) enroulé autour de la feuille d'isolation flexible (1102, 1202) sous la forme d'un enroulement hélicoïdal de telle sorte que le film plastique (1103, 1203) comprime la feuille d'isolation flexible (1102, 1202) ; formant ainsi plusieurs ensembles comprenant le tuyau interne (1101, 1201), la feuille d'isolation flexible (1102, 1202) et le film plastique (1103, 1203) ; et
comprenant un profil de tuyau en mousse en plusieurs parties (1104, 1204) contiguës les unes aux autres disposées autour des ensembles comprenant le tuyau interne (1101, 1201), la feuille d'isolation flexible (1102, 1202) et le film plastique (1103, 1203) ; les extrémités des parties de profil de tuyau en mousse contiguës exposées à l'extérieur ayant été réunies ensemble par soudage, pour enfermer les ensembles comprenant le tuyau interne (1101, 1201), la feuille d'isolation flexible (1102, 1202) et le film plastique (1103, 1203) dans de la mousse (1104, 1204).

5. - Tuyau isolé selon l'une quelconque des revendications précédentes, dans lequel ledit matériau de matrice est un matériau textile, de préférence dans lequel ledit matériau textile est un matériau non tissé, en particulier dans lequel le matériau non tissé est composé de fibres plastiques.

6. - Tuyau isolé selon l'une quelconque des revendications précédentes, dans lequel ledit aérogel est un aérogel de silice.

7. - Tuyau isolé selon l'une quelconque des revendications précédentes, dans lequel plusieurs desdites feuilles d'isolation flexibles (2, 2', 12, 12') sont enroulées autour d'au moins l'un du ou des tuyaux internes, de préférence 2 ou 3 desdites feuilles d'isolation flexibles.

8. - Tuyau isolé selon l'une quelconque des revendications précédentes, comprenant en outre une enveloppe externe (5, 15, 105, 1005, 1105, 1205), de préférence dans lequel l'enveloppe externe est une enveloppe externe ondulée.

9. - Procédé de fabrication d'un tuyau isolé, comprenant
fournir un ou plusieurs tuyaux internes (1, 11, 101, 1001) ;
enrouler une feuille d'isolation flexible (2, 2', 12, 12', 102, 1002) autour d'au moins l'un du ou des tuyaux internes (1, 11, 101, 1001), ladite feuille d'isolation flexible (2, 2', 12, 12', 102, 1002) comprenant un matériau de matrice imprégné d'un aérogel ;
réunir ensemble les extrémités de la feuille d'isolation flexible (2, 2', 12, 12', 102, 1002), où réunir ensemble les extrémités de la feuille d'isolation flexible (2, 2', 12, 12', 102, 1002) comprend l'enroulement d'un film plastique autour de la feuille d'isolation flexible (2, 2', 12, 12', 102, 1002) sous la forme d'un enroulement hélicoïdal de telle sorte que le film plastique (3, 3', 13, 13', 103, 1003) comprime la feuille d'isolation flexible (2, 2', 12, 12', 102, 1002) ; formant ainsi un ensemble comprenant le tuyau interne (1, 11, 101, 1001), la feuille d'isolation flexible (2, 2', 12, 12', 102, 1002) et le film plastique (3, 3', 13, 13', 103, 1003) ;
fournir un mat de mousse ou profilé de tuyau en mousse ouvert (4, 14, 104', 1004) ; disposer ledit mat de mousse ou profilé de tuyau en mousse ouvert (4, 14, 104', 1004) autour de l'ensemble comprenant le tuyau interne (1, 11, 101, 1001), la feuille d'isolation flexible (2, 2', 12, 12', 102, 1002) et le film plastique (3, 3', 13, 13', 103, 1003) ; et
réunir ensemble par soudage les extrémités du mat de mousse ou profilé de tuyau en mousse ouvert (4, 14, 104', 1004), pour enfermer l'ensemble comprenant le tuyau interne (1, 11, 101, 1001), la feuille d'isolation flexible (2, 2', 12, 12', 102, 1002) et le film plastique (3, 3', 13, 13', 103, 1003) dans de la mousse (4, 14, 104', 1004).

10. - Procédé selon la revendication 9, comprenant
fournir un ou plusieurs tuyaux internes (1, 11, 101, 1001) ;
enrouler ladite feuille d'isolation flexible (2, 2', 12, 12', 102, 1002) autour d'au moins l'un du ou des tuyaux internes (1, 11, 101, 1001) ; et réunir ensemble les extrémités de la feuille d'isolation flexible (2, 2', 12, 12', 102, 1002), où réunir ensemble les extrémités de la feuille d'isolation flexible (2, 2', 12, 12', 102, 1002) comprend l'enroulement d'un film plastique (3, 3', 13, 13', 103, 1003) autour de la feuille d'isolation flexible (2, 2', 12, 12', 102, 1002) sous la forme d'un enroulement hélicoïdal de telle sorte que le film plastique (3', 13', 103, 1003) comprime la feuille ; formant ainsi un ensemble comprenant le tuyau interne (1, 11, 101, 1001), la feuille d'isolation flexible (2, 2', 12, 12', 102, 1002) et le film plastique (3, 3', 13, 13', 103, 1003) ;
fournir un tuyau en mousse (4, 14, 104', 1004), par exemple par extrusion ;
inciser ledit tuyau en mousse (4, 14, 104', 1004) dans la direction longitudinale ;
disposer l'ensemble comprenant le tuyau interne (1, 11, 101, 1001), la feuille d'isolation flexible (2, 2', 12, 12', 102, 1002) et le film plastique (3, 3', 13, 13', 103, 1003) à l'intérieur du tuyau en mousse ouvert (4, 14, 104', 1004) ; et
souder ensemble les extrémités du tuyau en mousse ouvert (4, 14, 104', 1004) pour enfermer l'ensemble comprenant le tuyau interne (1, 11, 101, 1001), la feuille d'isolation flexible (2, 2', 12, 12', 102, 1002) et le film plastique (3, 3', 13, 13', 103, 1003) dans de la mousse (4, 14, 104', 1004).

11. - Procédé selon la revendication 9, comprenant
fournir un ou plusieurs tuyaux internes (1, 11, 101, 1001) ;
enrouler ladite feuille d'isolation flexible (2, 2', 12, 12', 102, 1002) autour d'au moins l'un du ou des tuyaux internes (1, 11, 101, 1001) ;
réunir ensemble les extrémités de la feuille d'isolation flexible (2, 2', 12, 12', 102, 1002), où réunir ensemble les extrémités de la feuille d'isolation flexible (2, 2', 12, 12', 102, 1002) comprend l'enroulement d'un film plastique (3, 3', 13, 13', 103, 1003) autour de la feuille d'isolation flexible (2, 2', 12, 12', 102, 1002) sous la forme d'un enroulement hélicoïdal de telle sorte que le film plastique (3', 13', 103, 1003) comprime la feuille d'isolation flexible (2, 2', 12, 12', 102, 1002) ; formant ainsi un ensemble comprenant le tuyau interne (1, 11, 101, 1001), la feuille d'isolation flexible (2, 2', 12, 12', 102, 1002) et le film plastique (3, 3', 13, 13', 103, 1003) ;
fournir un mat de mousse (4, 14, 104', 1004) ;
disposer ledit mat de mousse (4, 14, 104', 1004) autour de l'ensemble comprenant le tuyau interne (1, 11, 101, 1001), la feuille d'isolation flexible (2, 2', 12, 12', 102, 1002) et le film plastique (3, 3', 13, 13', 103, 1003) ; et
réunir ensemble par soudage les extrémités du mat de mousse (4, 14, 104', 1004), pour enfermer l'ensemble comprenant le tuyau interne (1, 11, 101, 1001), la feuille d'isolation flexible (2, 2', 12, 12', 102, 1002) et le film plastique (3, 3', 13, 13', 103, 1003) dans de la mousse (4, 14, 104', 1004).

12. - Procédé de fabrication d'un tuyau isolé comprenant
fournir plusieurs tuyaux internes (1101, 1201) ;
enrouler une feuille d'isolation flexible (1102, 1202) autour de chacun des tuyaux internes (1101, 1201), ladite feuille d'isolation flexible (1102, 1202) comprenant un matériau de matrice imprégné d'un aérogel ;
réunir ensemble les extrémités des feuilles d'isolation flexibles (1102, 1202), où réunir ensemble les extrémités des feuilles d'isolation flexibles (1102, 1202) comprend l'enroulement d'un film plastique (1103, 1203) autour de chaque feuille d'isolation flexible (1102, 1202) sous la forme d'un enroulement hélicoïdal de telle sorte que les films plastiques (1103, 1203) compriment les feuilles d'isolation flexibles (1102, 1202) ; formant ainsi des ensembles comprenant un tuyau interne (1101, 1201), une feuille d'isolation flexible (1102, 1202) et un film plastique (1103, 1203) ;
fournir un profil de tuyau en mousse en plusieurs parties (1104, 1204) ; disposer ledit profil de tuyau en mousse (1104, 1204) autour des ensembles comprenant le tuyau interne (1101, 1201), la feuille d'isolation flexible (1102, 1202) et le film plastique (1103, 1203) de telle sorte que lesdites plusieurs parties soient contiguës les unes aux autres ;
réunir ensemble par soudage les extrémités des parties de profilé de tuyau en mousse contiguës exposées à l'extérieur pour enfermer les ensembles comprenant le tuyau interne (1101, 1201), la feuille d'isolation flexible (1102, 1202) et le film plastique (1103, 1203) dans de la mousse (1104, 1204).

13. - Procédé selon la revendication 12, dans lequel ledit profilé de tuyau en mousse (1104, 1204) en plusieurs parties est fourni sous la forme d'un profilé à plusieurs canaux pour recevoir lesdits ensembles, le profilé comportant des découpes à partir de l'extérieur du profilé pour chaque canal, les découpes s'étendant seulement à partir de la surface externe du profilé à chaque canal, tout en laissant la partie interne du profilé intacte, de préférence, le profilé de tuyau en mousse (1204) contenant deux canaux et le profilé étant découpé à partir des deux côtés par des découpes s'étendant à partir de la surface externe du profilé aux canaux, mais non entre les canaux.

14. - Procédé selon l'une quelconque des revendications 9 à 13, comprenant en outre : doter le tuyau isolé d'une enveloppe externe (5, 15, 105, 1005, 1105, 1205), de préférence une enveloppe ondulée.

15. - Système de chauffage ou de refroidissement comprenant un ou plusieurs tuyaux isolés selon l'une quelconque des revendications 1 à 8 en liaison avec une source de chaleur ou source de refroidissement respective.
